# EUROPEAN PATENT APPLICATION

(11) **EP 3 192 603 A1**
(43) Date of publication of application: **19.07.2017**
(21) Application number: 16151471.6
(22) Date of filing: 15.01.2016
(51) Int. Cl.: B23C 3/00

(54) **A METHOD FOR MACHINING A TOP SIDE OF AN ENGINE BLOCK**

(71) Applicant: Sandvik Intellectual Property AB, 811 81 Sandviken (SE)
(72) Inventor: HELLSTRÖM, Lars, SE-810 22 ÅRSUNDA (SE); DAVID, Emmanuel, SE-811 30 Sandviken (SE)

(57) **Abstract**

A method for machining a top side (105) of an engine block (100), comprising an engine block body (101) of a first material having a head face (106) at the top side and at least one cylinder liner (102) of a second material located in intimate contact with the engine block body, the cylinder liner having an annular end face (107) at the top side. The method comprises:
- in a first step, machining the end face of the cylinder liner to form a recess concentric with the end face by feeding a first milling tool (200) into the engine block, the first milling tool having at least one surface generating cutting edge (204), following a tool path around a centre point of the annular end face,
- in a subsequent step, machining the head face to reduce the depth of the recess.

The first milling tool is configured with a diameter (D₁) so that, in the first step, the at least one surface generating cutting edge at all times overlaps an inner wall (104) of the cylinder liner as the tool follows the tool path.

## Description

### TECHNICAL FIELD OF THE INVENTION

The present invention relates to a method for machining a top side of an engine block according to the preamble of claim 1. In particular, the invention relates to such a method for machining the top face of a bimetal engine block comprising an engine block body of a first material and at least one cylinder liner of a second material provided in a cylindrical cavity of the engine block body. The cylinder liners can e.g. be in the form of cast iron cylinder liners or spray coated metallic cylinder liners.

### BACKGROUND AND PRIOR ART

During machining of the top side of bimetal engine blocks, often comprising an aluminium engine block body and several cast iron cylinder liners, a milling tool with a larger diameter than the engine block width is commonly used to machine the top side in a single operation. However, iron chips from the cylinder liners tend to stick on the cutting edges of the milling tool and thereby cause unwanted scratches in the aluminium surface. Moreover, frittering, i.e. edge breakouts from the inner walls of the cast iron cylinder liners arising as the cutting edges of the milling tool exit the cylinder liners, is a common problem arising during machining of bimetallic engine blocks.

EP1222981 discloses a method for machining a top side of a bimetallic engine block using a milling tool. The engine block comprises an engine block body of aluminium and a plurality of cylindrical cylinder liners of a ferrous material such as cast iron. At the top side of the engine block, each cylinder liner has an annular end face.

According to EP1222981, the machining is carried out in two steps. The first step comprises machining the end face of the cylinder liner to form a recess centred on the annular end face. This is performed by feeding a milling tool into the engine block while following an orbital tool path relative to a long axis of the cylinder liner. The second and subsequent step comprises machining the remaining part of the top side, i.e. the aluminium of the engine block body, to reduce the depth of the recess.

The method carried out in two steps reduces the problems with scratches, since the cylinder liners and the engine block body are machined separately. However, the above discussed problem with frittering remains.

### SUMMARY OF THE INVENTION

It is an objective of the present invention to provide a method for machining a top side of a bimetal engine block by means of which the above discussed problem with frittering is reduced, in particular for a bimetal engine block comprising a ferrous cylinder liner and an aluminium or aluminium alloy cylinder engine block body.

This objective is achieved by means of the method initially defined, which is characterised in that the first milling tool is configured with a diameter so that, in the first step, the at least one surface generating cutting edge at all times overlaps an inner wall of the cylinder liner as the axis of rotation is following the tool path around the centre point of the annular end face. In other words, at least a part of the at least one surface generating cutting edge always reaches past the inner wall of the cylinder liner, projecting over the cylindrical cavity provided within the cylinder liner, while another part of the surface generating cutting edge remains on the other side of the inner wall, machining the end face.

With this configuration, the surface generating cutting edge of the first milling tool never exits the end face of the cylinder liner during machining in the first step. Since frittering typically arises as the cutting edge exits a workpiece, in this case the cylinder liner, the problem with frittering in the inner wall of the cylinder liner is thereby reduced or eliminated. The resulting engine block obtains a better surface finish without breakouts in the inner wall of the cylinder liner and without scratches in the head face of the engine block body.

Preferably, a milling tool provided with a plurality of cutting inserts are used in the first step as well as in the second step. The milling tool is preferably a face milling tool. The same milling tool can be used in both steps, or different milling tools can be used.

According to one embodiment, in the first step, the axis of rotation of the first milling tool follows a helical tool path. A helical tool path gives a clean cut and a good surface finish. Typically, a diameter of the helical tool path is within a range of 0.5-1 times a wall thickness of the cylinder liner. However, the diameter of the helical tool path should be set in dependence on the tool diameter and the length of the surface generating cutting edge or edges. The helical tool path is preferably in the form of a circular helix having a constant diameter.

According to one embodiment, the diameter of the first milling tool is at least as large as an outer diameter of the cylinder liner. This is one way of achieving an overlap of the surface generating cutting edge and the inner wall of the cylinder liner.

According to one embodiment, the first milling tool comprises several cutting inserts, each cutting insert comprising an active surface generating cutting edge. The efficiency is increased by the use of several cutting inserts, and by using only cutting inserts with active surface generating cutting edges, i.e. relatively long and slightly curved cutting edges configured to form a smooth surface, it can be ensured that all of the active cutting edges overlap the cylinder liner during machining. This type of cutting inserts is sometimes referred to as wiper inserts.

According to one embodiment, the at least one surface generating cutting edge of the first milling tool has a length within a range of 2-4 times a wall thickness of the cylinder liner. This is one way of achieving an overlap of the entire surface generating cutting edge and the cylinder liner, given that the milling tool diameter and the diameter of the tool path are adapted for this purpose.

According to one embodiment, the first milling tool is used in both the first and the second step. This is convenient and cost efficient, since the entire top side can be machined using only one milling tool without intermediate adjustments.

According to one embodiment, in the second step, the first milling tool follows a zigzag tool path for face milling the entire top side of the engine block. A continuous face milling operation of the top side is thereby achieved, even though the milling tool diameter is necessarily smaller than a width of the engine block.

According to one embodiment, in the second step, the first milling tool follows a spiral shaped tool path. The spiral shaped tool path comprises a first straight path traversing the centre point of each of the at least one annular end face, and a second partly annular path following a periphery of the top side, for face milling the entire top side of the engine block. The first milling tool can in this way stay engaged with the top side of the engine block from milling of the last end face of a cylinder liner and all the way through the milling operation performed in the second step, thus enabling a cost-efficient milling operation.

According to one embodiment, in the second step, the machining is performed using a second milling tool different from the first milling tool. The first and the second milling tools can thereby be configured for their respective milling operations, which makes it possible to achieve a better precision and surface finish.

According to one embodiment, the second milling tool has a diameter at least as large as an entire width of the top side of the engine block and follows a linear tool path perpendicular to the width of the top side of the engine block. Preferably, the diameter is 20-50% larger than the width of the top side. In this way, the second step can be performed by face milling along a length of the engine block body in a so called full face cut. This results in excellent precision and ensures that the entire top side is planar without steps.

According to one embodiment, the second milling tool comprises at least one engine block body machining cutting edge configured to remove material only from the engine block body and at least one surface generating cutting edge configured to remove material from both the at least one cylinder liner and from the engine block body. The tool can thereby be adapted to remove material efficiently from the head face of the engine block body using the engine block body machining cutting edge or edges, while at the same time creating a smooth and level surface of the entire engine block, including the end face of the cylinder liner or liners, using the at least one surface generating cutting edge. For example, polycrystalline diamond (PCD) cutting inserts can be used for the engine block body machining cutting edges, while cubic boron nitride (CBN) cutting inserts can be used for the surface generating cutting edge or edges. The PCD inserts are optimal for machining of aluminium and aluminium alloys, while the CBN inserts are better for the machining of cast iron and ferrous alloys. Each one of the CBN cutting insert or inserts in this case preferably comprises a wiper edge for generating a smooth surface.

According to one embodiment, in the second milling tool, said at least one engine block body machining cutting edge is recessed with respect to the at least one surface generating cutting edge. Thus, when the tool is hovering above the top side of the engine block, this distance is larger between the engine block body machining cutting edge or edges and the top side than between the surface generating cutting edge or edges and the top side. The engine block body machining cutting edge or edges thus never come into contact with the already machined cylinder liner, around which a recess was formed in the first step. A cutting insert comprising an engine block body machining cutting edge should have a larger depth of cut than an insert comprising a surface generating cutting edge, so that it is ensured that the engine block body machining cutting insert is used to remove the largest amount of material in the second step. Typically, the at least one surface generating cutting edge is a wiper cutting edge.

According to one embodiment, the second step is performed such that the head face and the end face become level. Due to quality requirements, this is generally a preferred design of the top side.

According to one embodiment, minimum quantity lubrication is used in at least one of the first step and the second step. Minimum quantity lubrication (MQL) is also known as near-dry machining and involves use of a thin film of lubricant coating the interface between the cutting edge and the workpiece, applied in the form of an oil mist. The thin film of lubricant prevents heat build-up through friction reduction. Use of vast amounts of liquid coolant can thus be avoided, which is advantageous with regard to cost efficiency as well as environmental and health related aspects. Furthermore, MQL generally provides more efficient cooling and less problems with chips sticking to the cutting edges.

According to one embodiment, the first milling tool comprises cubic boron nitride cutting inserts. CBN cutting inserts are optimal for cutting ferrous materials such as cast iron and are therefore suitable for the machining of the cylinder liners.

Further advantageous features and advantages of the invention will appear from the following detailed description.

### BRIEF DESCRIPTION OF THE DRAWINGS

The invention will in the following be described by means of example with reference to the appended drawings, in which:
- Fig. 1: is a perspective view of an engine block and a milling tool used in a method according to an embodiment of the invention,
- Fig. 2: is a cross sectional partial side view showing the engine block and milling tool from fig. 1 just before engagement,
- Fig. 3: is a top view schematically showing a tool path and a cylinder liner,
- Fig. 4a-c: are cross sectional partial side views schematically showing cutting edges of a milling tool and a cylinder liner,
- Fig. 5: is a top view of the engine block and milling tool shown in fig. 1,
- Fig. 6: is another top view of the engine block and milling tool shown in fig. 1,
- Fig. 7: is a top view of the engine block and a second milling tool used in another embodiment of the invention,
- Fig. 8: is a perspective view of the second milling tool,
- Fig. 9a-b: are front views of two cutting inserts used in the second milling tool, and
- Fig. 10: is a flow chart illustrating a method according to the invention.

### DETAILED DESCRIPTION OF EMBODIMENTS OF THE INVENTION

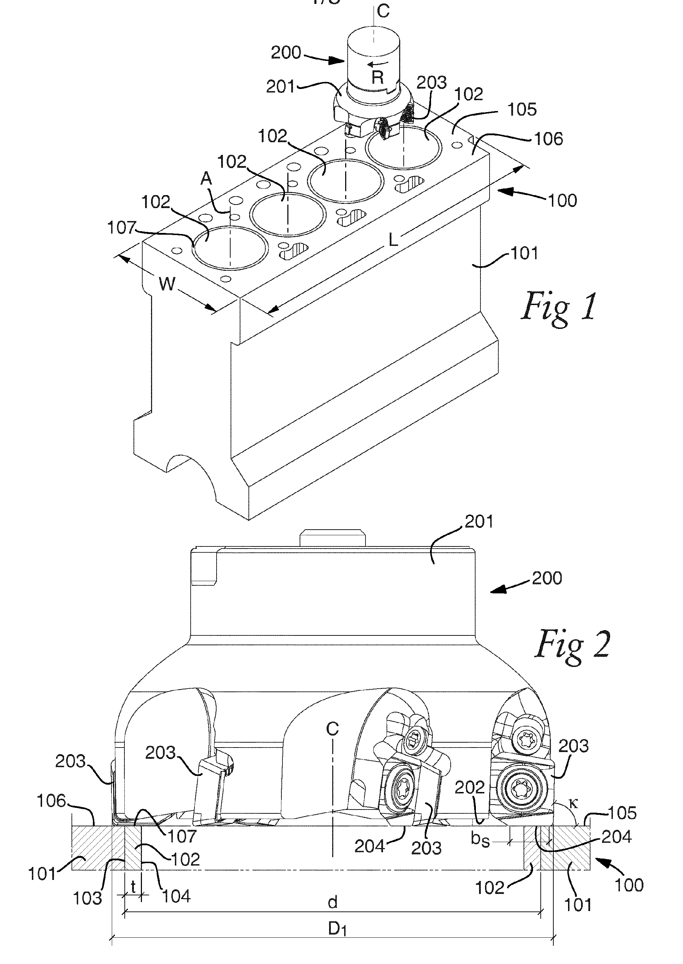

An engine block 100 and a milling tool 200 involved in a method according to an embodiment of the invention is shown in fig. 1 and in closer detail in fig. 2. The engine block 100 comprises an engine block body 101 made from aluminium. Four cylindrical cavities are formed in the engine block body 101. In each cylindrical cavity, a cast iron cylinder liner 102 with a wall thickness t and an outer diameter d is provided. The cylinder liner 102 has an outer wall 103 being in intimate contact with the engine block body 101. A cylindrical cavity is provided inside of an inner wall 104 of the cylinder liner 102.

The engine block 100 has a top side 105 on which a head gasket and cylinder heads (not shown) are to be provided after machining of the top side 105. Before machining of the top side 105 according to the inventive method, the top side 105 is relatively rough and a tight seal with the head gasket and the cylinder heads can therefore not be achieved. At the top side 105, the engine block body 101 has a head face 106 and each of the cylinder liners 102 has an annular end face 107, substantially level with the head face 106. The top side 105 has a width W and a length L and extends in a plane perpendicular to a longitudinal axis A of each cylinder liner 102.

The milling tool 200 is a face milling tool comprising a tool body 201 with a front end 202 in which several detachable cutting inserts 203 are mounted. The milling tool 200 has a central axis of rotation C extending in parallel with the longitudinal axis A of the cylinder liners 102. During machining, the milling tool 200 rotates in a direction of rotation R about the central axis of rotation C. Each cutting insert 203 comprises a surface generating cutting edge 204 in the form of a so called wiper edge with a slight curvature and with a length bₛ of approximately 2.5 times the wall thickness t of the cylinder liner 102. The cutting inserts 203 are CBN cutting inserts suitable for machining cast iron and having an entering angle κ of 90°. The milling tool 200 has a diameter D₁ which is slightly larger than the outer diameter d of the cylinder liners 102. When the milling tool 200 is centred over the cylinder liner 102, all of the surface generating cutting edges 203 overlap the end face 107 of the cylinder liner 102.

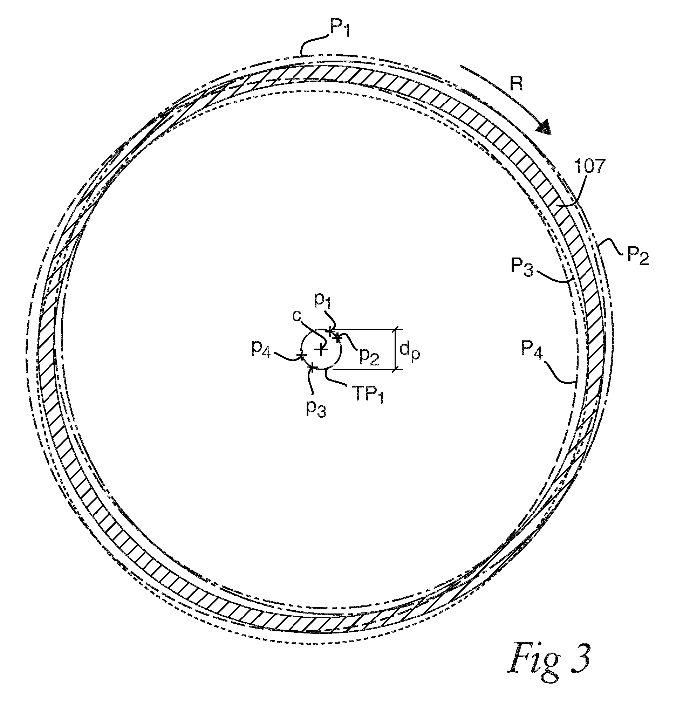

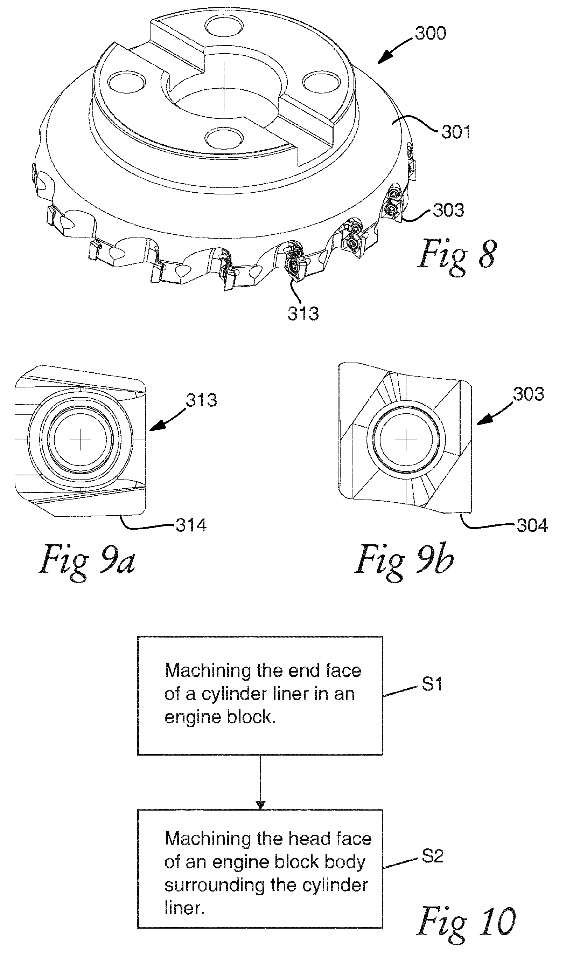

The method according to the invention is carried out in two steps as illustrated in the flow chart of fig. 10. In a first embodiment of the inventive method, the milling tool 200 described above is used in both steps. A first step S1 involves machining the end face 107 of each cylinder liner 102 to form a recess (not shown) concentric with the annular end face 107. The end face 107 in its entirety is located within the formed recess. The machining is carried out by feeding the milling tool 200 into the engine block 100 with the axis of rotation C normal to the top side 105. In the first step S1, the axis of rotation C follows a tool path TP₁ (see fig. 3) in the form of a circular helix centred on the longitudinal axis A of the cylinder liner 102. A diameter dₚ of the tool path TP₁, the tool diameter D₁ and the length bₛ of the surface generating cutting edges 204 are selected such that the surface generating cutting edges 204 overlap the end face 107 of the cylinder liners 102 at all times as the tool follows the tool path TP₁. The milling tool 200 is gradually fed into the engine block 100 until a desired depth of cut is achieved. After the first step S1, the engine block 100 comprises a shallow cylindrical recess formed around each one of the cylinder liners 102.

Fig. 3 schematically shows the tool path TP₁ of the first milling tool 200 in the first step S1 as seen from the milling tool. The small circle represents the helical tool path which the axis of rotation C of the milling tool follows during machining around a centre point c of the annular end face 107, here coinciding with the longitudinal axis A of the cylinder liner 102. The outer circles P₁, P₂, P₃ and P₄ represent the positions of midpoints of the cutting edges 204 when the milling tool 200 is at positions p₁, p₂, p₃ and p₄ along the tool path TP₁, respectively. The tool path TP₁ has a diameter dₚ which is typically about 0.5-1 times the wall thickness of the cylinder liner 102.

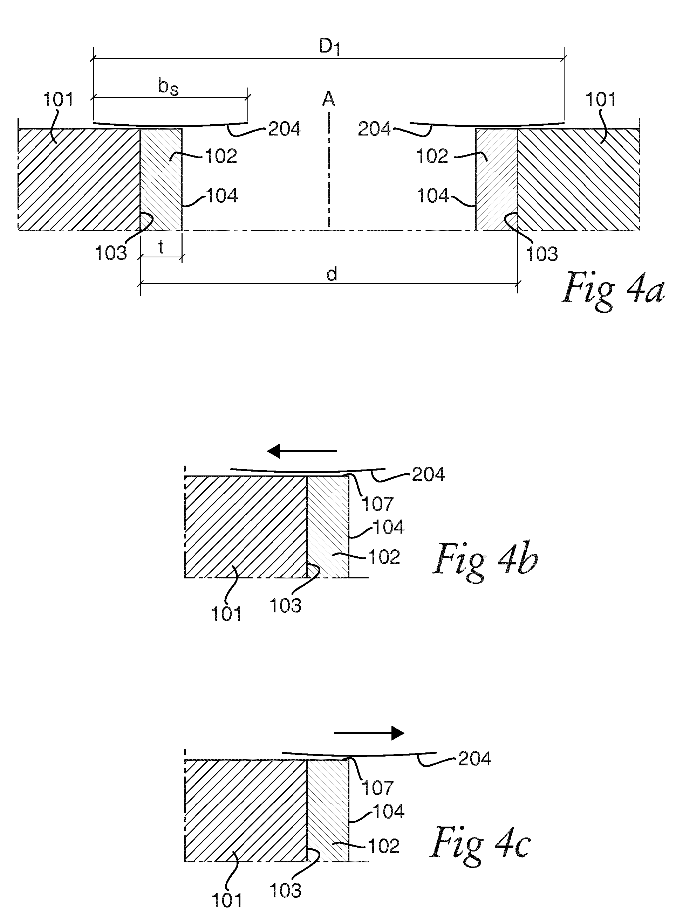

Fig. 4a-c very schematically show how the surface generating cutting edges 204 used in the first step S1 are positioned with respect to the cylinder liner 102 as the milling tool 200 follows the tool path TP₁. In fig. 4a, the milling tool 200 is centred over the cylinder liner 102. Fig. 4b and 4c show maximum displacements of the surface generating cutting edges 204 with respect to the cylinder liner 102 as the milling tool 200 follows the tool path TP₁. As can be seen, the surface generating cutting edges 204 at all times overlap both the inner wall 104 and the outer wall 103 of the cylinder liner 102.

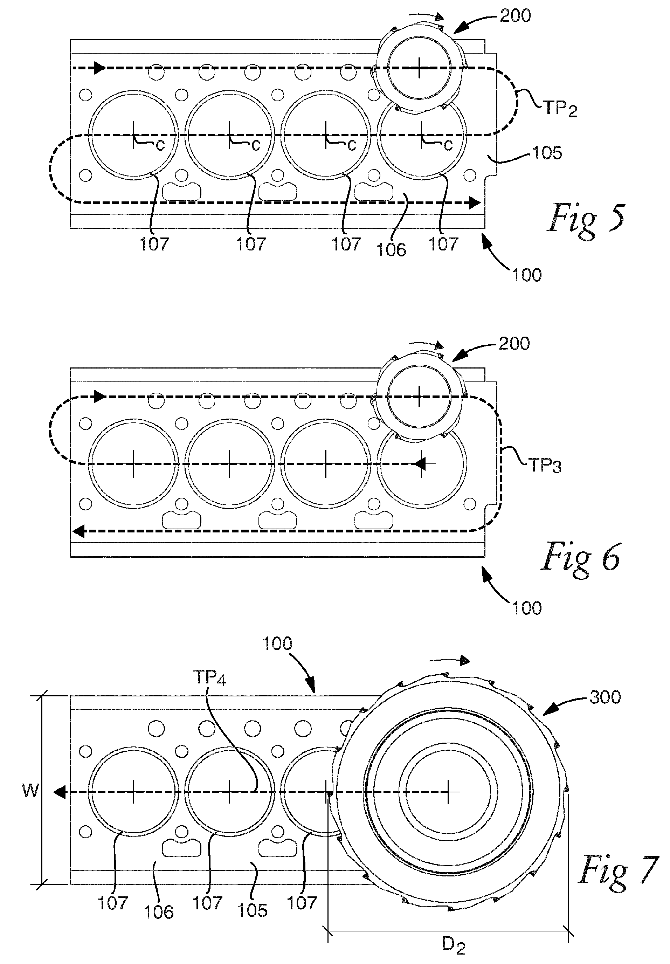

In a second step S2, performed after the first step, the remainder of the top side 105, comprising a major part of the head face 106 of the engine block body 101, is machined. In the first embodiment, the second step is carried out using the same milling tool as used in the first step. The milling tool is fed in a zigzag tool path TP₂ so that the entire top side 105 is face milled, such as shown in fig. 5. A depth of cut of the milling tool 200 is identical to a depth of cut achieved in the first step S1, so that an even surface is obtained with the end face 107 of the cylinder liners 102 level with the head face 106 of the engine block body 101.

An alternative tool path TP₃ for use in the second step S2 is shown in fig. 6. This tool path TP₃ is a spiral shaped tool path comprising a first straight path, reaching from the centre point c of the, in the first step, lastly milled end face 107, along the length L of the top side 105 and across the centre points c of the previously milled end faces 107. The tool path TP₃ further comprises a partly annular path reaching around a periphery of the top side 105. Thus, when following the spiral shaped tool path TP₃, the milling tool 200 first removes material from a central part of the top side 105, and thereafter from an area of the top side 105 surrounding the central part.

In a second embodiment, the first step S1 is performed in the same manner as in the first embodiment, and with a first milling tool 200 which is identical to the one used in the first embodiment. However, the second step S2 is performed with a second milling tool 300, shown in fig. 7, which has a diameter D₂ which is larger than the diameter D₁ of the first milling tool 200. The diameter D₂ of the second milling tool 300 is approximately 1.3 times the width W of the top side 105 of the engine block 100, as is shown in fig. 7. As shown in fig. 8 and fig. 9a and 9b, the second milling tool 300 comprises a tool body 301 and several cutting inserts 303, 313 of which a majority are PCD cutting inserts 303 with an entering angle κ of 90°, having cutting edges 304 adapted to remove aluminium from the head face 106 of the engine block body 101. In the shown embodiment, the second milling tool 300 also comprises three CBN cutting inserts 313 comprising a surface generating cutting edge 314 in the form of a wiper edge, similar to the cutting inserts 203 mounted in the first milling tool 200. The CBN cutting inserts 313 are mounted with the surface generating cutting edges 314 extending slightly below the cutting edges 304 of the PCD cutting inserts 303. In other words, the PCD cutting inserts 303 are slightly recessed with respect to the CBN cutting inserts 313.

The second step S2 is in the second embodiment performed by face milling along a linear tool path TP₄ parallel with the length L of the top side 105 of the engine block 100 using the second milling tool 300. The milling tool 300 face mills the entire top side 105 in a so called full face cut. The milling tool 300 and the operational parameters are adapted so that the PCD cutting inserts 303 have a depth of cut slightly smaller than a depth of cut achieved in the first step, i.e. the depth of the shallow recesses formed around the cylinder liners 102. The PCD cutting inserts 303 are thus not in contact with the cylinder liners 102, only with the part of the head face 106 of the engine block body 101 that was not machined during the first step S1. Meanwhile, the CBN cutting inserts 313 have a smaller depth of cut than the PCD cutting inserts 303 and remove only a small amount of material from both the head face 106 of the engine block body 101 and from the end face 107 of the cylinder liners 102, thus generating a smooth and level surface on the top side 105.

Minimum quantity lubrication is preferably used in both steps S1 and S2.

The invention is of course not limited to the embodiments disclosed, but may be varied and modified within the scope of the following claims. For example, the method may be adapted for machining of top sides which are inclined with respect to the longitudinal axes of the cylinder liners. In this case, the tool path used in the first step may be slightly modified to correctly machine the end face of the cylinder liners while overlapping at all times their inner walls. The tool used may be varied depending on for example the dimensions and materials of the engine block. The number of cutting inserts may be varied as well as the type of cutting inserts.

## Claims

1. A method for machining a top side (105) of an engine block (100), comprising an engine block body (101) of a first material having a head face (106) at the top side (105) and having at least one cylindrical cavity in which a cylinder liner (102) of a second material is located in intimate contact with the engine block body (101), the cylinder liner (102) having an annular end face (107) at the top side (105),
wherein the method comprises:
- in a first step (S1), machining the end face (107) of the cylinder liner (102) to form a recess concentric with the annular end face (107) and in which recess the end face (107) in its entirety is located, wherein the machining is carried out by feeding a first milling tool (200) into the engine block (100), the first milling tool (200) having at least one surface generating cutting edge (204) and an axis of rotation (C) normal to the top side (105), the axis of rotation (C) following a tool path (TP₁) around a centre point (c) of the annular end face (107),
- in a second and subsequent step (S2), machining the head face (106) of the engine block body (101) to reduce the depth of the recess,
***characterised in***
**that** the first milling tool (200) is configured with a diameter (D₁) so that, in the first step (S1), the at least one surface generating cutting edge (204) at all times overlaps an inner wall (104) of the cylinder liner (102) as the axis of rotation (C) is following the tool path (TP₁) around the centre point (c) of the annular end face (107).

2. The method according to claim 1, wherein, in the first step (S1), the axis of rotation (C) of the first milling tool (200) follows a helical tool path (TP₁).

3. The method according to claim 1 or 2, wherein the diameter (D₁) of the first milling tool (200) is at least as large as an outer diameter (d) of the cylinder liner (102).

4. The method according to any one of the preceding claims, wherein the first milling tool (200) comprises several cutting inserts (203), each cutting insert (203) comprising an active surface generating cutting edge (204).

5. The method according to any one of the preceding claims, wherein the at least one surface generating cutting edge (204) of the first milling tool (200) has a length (bₛ) within a range of 2-4 times a wall thickness (t) of the cylinder liner (102).

6. The method according to any one of the preceding claims, wherein the first milling tool (200) is used in both the first and the second step (S1, S2).

7. The method according to claim 6, wherein, in the second step (S2), the first milling tool (200) follows a zigzag tool path (TP₂) for face milling the entire top side (105) of the engine block (100).

8. The method according to claim 6, wherein, in the second step (S2), the first milling tool (200) follows a spiral shaped tool path (TP₃).

9. The method according to any one of claims 1-5, wherein, in the second step (S2), the machining is performed using a second milling tool (300) different from the first milling tool (200).

10. The method according to claim 9, wherein the second milling tool (300) has a diameter (D₂) at least as large as an entire width (W) of the top side (105) of the engine block (100) and follows a linear tool path perpendicular to the width (W) of the top side (105) of the engine block (100).

11. The method according to any one of claims 9-10, wherein the second milling tool (300) comprises at least one engine block body machining cutting edge (304) configured to remove material only from the engine block body (101) and at least one surface generating cutting edge (314) configured to remove material from both the at least one cylinder liner (102) and from the engine block body (101).

12. The method according to claim 11, wherein, in the second milling tool (300), said at least one engine block body machining cutting edge (304) is recessed with respect to the at least one surface generating cutting edge (314).

13. The method according to any one of the preceding claims, wherein the second step (S2) is performed such that the head face (106) and the end face (107) become level.

14. The method according to any one of the preceding claims, wherein minimum quantity lubrication is used in at least one of the first step (S1) and the second step (S2).

15. The method according to any one of the preceding claims, wherein the first milling tool (200) comprises cubic boron nitride cutting inserts (203).
